# EUROPÄISCHE PATENTSCHRIFT

(11) **EP 0 770 307 B1**
(45) Veröffentlichungstag und Bekanntmachung des Hinweises auf die Patenterteilung: **26.08.1998**
(21) Anmeldenummer: 95920780.4
(22) Anmeldetag: 14.06.1995
(51) Int. Cl.: H04N 7/088, G09G 5/24

(54) **GERÄT ZUR VERARBEITUNG VON VIDEOSIGNALEN MIT EINER TELETEXT-VERARBEITUNGSEINRICHTUNG**
VIDEO SIGNAL PROCESSING APPARATUS WITH A TELETEXT PROCESSOR
APPAREIL DE TRAITEMENT DE SIGNAUX VIDEO POURVU D'UN DISPOSITIF DE TRAITEMENT DE TELETEXTE

(30) Priorität: 08.07.1994 DE 4424137
(43) Veröffentlichungstag der Anmeldung: 02.05.1997
(73) Patentinhaber: SIEMENS AKTIENGESELLSCHAFT, 80333 München (DE)
(72) Erfinder: ENGLERT, Ulrich, D-81549 München (DE); HAJIMUSA, Imran, Singapore 1334 (SI)
(86) Internationale Anmeldenummer: DE9500761
(87) Internationale Veröffentlichungsnummer: WO9602110

(56) Entgegenhaltungen:
- EP-A- 0 009 662
- EP-A- 0 283 533
- EP-A- 0 463 692
- DE-A- 3 142 171
- DE-A- 4 142 781
- GB-A- 2 076 572
- US-A- 3 215 773
- US-A- 4 286 329
- US-A- 4 797 945
- IEEE TRANSACTIONS ON SYSTEMS, MAN, AND CYBERNETICS, VOL.SMC-3, Nr. 3, Mai 1973 Seiten 257-265, SHI-KUO SCHANG 'AN INTERACTIVE SYSTEM FOR CHINESE CHARACTER GENERATION AND RETRIEVAL'

## Beschreibung

Die Erfindung betrifft ein Gerät enthaltend zur Verarbeitung von Videosignalen, enthaltend eine Teletextverarbeitungseinrichtung, die aufweist:
- eine Abtrenneinrichtung zur Abtrennung von Teletextdaten aus einem empfangenen Videosignal,
- eine Signalerzeugungseinrichtung zur Erzeugung von an einem Bildschirm darstellbaren Signalen zur Anzeige von in den Teletextdaten enthaltenen Zeichen,
- einen nichtflüchtigen Speicher, in dem an einem Bildschirm darstellbare Zeichen gespeichert sind,
- eine Steuerungseinrichtung, die die im nichtflüchtigen Speicher enthaltenen Zeichen zur Anzeige am Bildschirm der Signalerzeugungseinrichtung zuführt.

Geräte zur Verarbeitung von Videosignalen, die eine Teletextverarbeitungseinrichtung enthalten, wie zum Beispiel Fernsehgeräte, sind bekannt. Beim Teletextdienst werden senderseitig in der Vertikalaustastlücke digitale Daten übertragen. Empfängerseitig werden die Teletextdaten in einem Teletextprozessor zur Anzeige an einem Bildschirm aufbereitet. Die vom Sender übertragenen Daten enthalten Zeichen aus einem vorbestimmten Zeichensatz. Für ein darzustellendes Zeichen wird üblicherweise ein Digitalwert übertragen. Empfängerseitig liegt ein nicht-flüchtiger Nur-Lese-Speicher (ROM) vor, der die Bildpunktinformation für jedes darstellbare Zeichen enthält. Eine Steuerungseinrichtung sorgt für die Zuordnung des übertragenen digitalen Datenwerts zu den im ROM gespeicherten darstellbaren Zeichen. Ein Darstellungsgenerator dient zur Erzeugung von Signalen, mit denen der Bildschirm angesteuert werden kann.

Während zum Beispiel lateinische, arabische oder kyrillische Schriftzeichen eine überschaubare Anzahl von Zeichen aufweisen, können anderssprachige Zeichensätze, zum Beispiel für einige Länder Asiens, mehrere tausend Zeichen umfassen. Ein standardgemäßer chinesicher Zeichensatz umfaßt beispielsweise mehr als 7.600 Zeichen, die bei einer Auflösung von 24x30 Bildpunkten eine Speicherkapazität von etwa 5,5 MBit benötigen würden.

In der deutschen Offenlegungsschrift DE 41 42 781 A1 ist eine Einrichtung zur Einblendung von Zeichen in ein Fernsehbild (on-screen-display, OSD) beschrieben, bei der zur Verringerung der Speicherkapazität des darstellbaren Zeichensatzes die Zeichen codiert gespeichert werden. Hierzu wird ein Zeichen in einzelne Spalten unterteilt, wobei die Bitkombination jeder Spalte in einem ROM-Speicher enthalten ist. Ein weiterer ROM-Speicher enthält die Adressen der einem Zeichen zugeordneten Spaltenvektoren. Dieser ROM-Speicher wird wiederum von einem RAM-Speicher angesteuert, in dem die Adressen der jeweils darzustellenden Buchstaben zwischengespeichert werden.

In der Literaturstelle Warnke, H. H. et al.: SAA 5350 (EUROM), der Ein-Chip-Videotext-Prozessor für Bildschirmtext, in: Valvo Technische Information TI 84 08 27, 1984, Seiten 3 bis 4 ist der prinzipielle Aufbau des Prozessors SAA 5350 beschrieben. Dieser enthält ein Zeichen-ROM, in dem die Zeicheninformation für einen Zeichensatz in Form von Rasterpunktdaten enthalten ist. Diese werden mit Zeichenattributen kombiniert und einem Farbspeicher zugeführt, der eine Anzahl von nur 32 12-Bit-Zeichen aufnimmt. Aus diesem Farbspeicher wird die Information mit Rasterpunkt-Geschwindigkeit zur Ansteuerung eines D/A-Wandlers ausgelesen.

In der EP 0 463 692 ist eine Teletext-Empfangseinrichtung beschrieben, die einen Speicher enthält, in dem für jedes Zeichen ein 2-Byte-Speicherwort gespeichert ist. Bei der Ausgabe der Zeichen am Bildschirm wird aus dem 2-Byte-Wort mittels eines Zeichengenerators die bildpunktweise Darstellungsinformation zur Ansteuerung des Bildschirms erzeugt.

In der EP 0 009 662 A2 ist eine redundanzvermindernde Codierung für Zeichensätze chinesischer Zeichen beschrieben. Der Zeichensatz ist zur Verwendung in einem Drucker vorgesehen. Ein Speicher dient zur Zwischenspeicherung der noch nicht decodierten Zeichen. Beim Auslesen aus diesem Speicher werden die Zeichen decodiert und dann ohne weitere Zwischenspeicherung über den Druckerkopf ausgegeben.

Der Erfindung liegt die Aufgabe zugrunde, das eingangs genannte Gerät enthaltend eine Teletextverarbeitungseinrichtung derart zu verbessern, daß der Speicherbedarf für den Zeichensatz der darstellbaren Zeichen sowie der Verarbeitungsaufwand möglichst gering ist. Außerdem soll ein Verfahren zum Betreiben eines solchen Geräts angegeben werden.

Erfindungsgemäß wird dies dadurch gelöst, daß die im nichtflüchtigen Speicher enthaltenen Zeichen mit redundanzvermindernder Kodierung gespeichert sind, die Steuerungseinrichtung derart ausgeführt ist, daß die im nichtflüchtigen Speicher enthaltenen Zeichen beim Auslesen dekodiert werden, und daß ein beschreibbarer Speicher vorgesehen ist, in dem die Zeichen zur Anzeige am Bildschirm dekodiert und bildweise zwischengespeichert werden.

Ein Verfahren zum Betreiben eines solchen Geräts ist in Anspruch 9 angegeben.

Bei einem Teletextprozessor gemäß der Erfindung wird der Speicherbedarf für die darstellbaren Zeichen um die Kompressionsrate der redundanzvermindernden Kodierung verringert. Die Dekodierung wird zweckmäßigerweise beim Auslesen einzelner Zeichen aus dem Zeichensatzspeicher durchgeführt. Dies kann beispielsweise durch eine entsprechend programmierte in der Teletextverarbeitungseinrichtung enthaltene Mikroprozessoreinrichtung durchgeführt werden. Alternativ wäre denkbar, die Dekompressionvorschrift durch eine entsprechende dem Zeichensatzspeicher ausgangsseitig nachgeschaltete Hardwareeinrichtung auszuführen.

In der Erfindung ist ein beschreibbarer Speicher vorgesehen, in dem bildpunktweise eine am Bildschirm darzustellende Teletextseite zusammengesetzt wird. Wenn die Darstellung halbbildweise nach dem Zeilensprungverfahren erfolgt, werden im Bildspeicher die Bildpunkte zweier Halbbilder zwischengespeichert. Es ist wichtig, daß der Bildspeicher die in Bildpunkten aufgelöste Information der gesamten darzustellenden Seite enthält. Neben der Bildpunktinformation können auch weitere Darstellungsattribute für jedes Zeichen, wie zum Beispiel Hintergrund- und Vordergrundfarben, abgespeichert werden. Dies hat den Vorteil, daß eine darzustellende Bildschirmseite nur einmal zusammengestellt wird, und dann mit der Halbbildwiedergabefrequenz wiederholt aus dem Speicher ausgelesen wird. Der Dekompressionsvorgang ist hierbei nur einmal während der Zusammenstellung dieser gespeicherten Seite durchzuführen. Die Dekompression der darzustellenden Zeichen ist hierbei außerdem weniger zeitkritisch als ohne Zwischenspeicher. Sie kann beispielsweise durch einen bereits zu anderen Zwecken im Teletextprozessor enthaltenen Mikroprozessorkern ausgeführt werden. Dieser wird dazu mit entsprechender Software programmiert. Die Verarbeitungsgeschwindigkeit für das Zusammenstellen der Seite im Zwischenspeicher kann im allgemeinen durch den Mikroprozessorkern derart schnell ausgeführt werden, daß für den Betrachter keine Verzögerung beim Bildaufbau erkennbar ist.

Zur Codierung und Decodierung von Information sind eine Vielzahl von Verfahren bekannt. Prinzipiell kann im erfindungsgemäßen Gerät jedes Dekompressionsverfahren ausgeführt werden. Prinzipiell kann jeglicher Zeichensatz, z. B. lateinische Schriftzeichen, arabische Schriftzeichen, Sonderzeichen, die beispielsweise für Effektdarstellungen (Rahmen, Unterstreichen, Bedienungshinweiszeichen) etc. komprimiert gespeichert werden. In vorteilhafter Ausgestaltung der Erfindung ist jedoch die Teletextverarbeitungseinrichtung derart ausgebildet, daß die komprimierte Speicherung der Zeichen und entsprechend deren dekomprimierende Dekodierung auf Schriftzeichen, insbesondere chinesischer Schriftzeichen, angepaßt ist. Hierzu wird jedes Zeichen in eine Anzahl von Teilzeichenabschnitten aufgeteilt. Es hat sich herausgestellt, daß in einer Vielzahl von Zeichen gleiche Teilzeichen Verwendung finden. Diese werden im Speicher nur einmal abgespeichert, wobei über einen Zeiger auf deren Speicheradresse verwiesen wird. Zur Speicherung eines Schriftzeichens werden dann die entsprechenden Zeiger und die dem jeweiligen Zeichen eigentümliche Bildpunktinformation verwendet. Ein Zeichenabstand in vertikaler Richtung kann durch Leerzeilen erzeugt werden und braucht nicht im Zeichensatz gespeichert zu werden.

Zweckmäßigerweise werden diese Leerzeichen zusammen mit dem Zeichen in den Zwischenspeicher eingeschrieben. Auf diese Weise kann die zur Speicherung des gesamten Zeichensatzes notwendige Speicherkapazität wesentlich verringert werden. Die Integration eines Teletextprozessors als einzige integrierte Schaltung ist dann ohne weiteres mit heutigen Herstellungstechnologien möglich.

Nachfolgend werden die Erfindung und weitere vorteilhafte Ausgestaltungen anhand der in der Zeichnung dargestellten Figuren näher erläutert. Es zeigen:
- Figur 1: ein Fernsehgerät mit einem Teletextprozessor,
- Figur 2: ein Zeichen mit verschiedenen Zeichenabschnitten,
- Figur 3: die Speicherbelegung des nichtflüchtigen Speichers zur Speicherung der darstellbaren Zeichen.

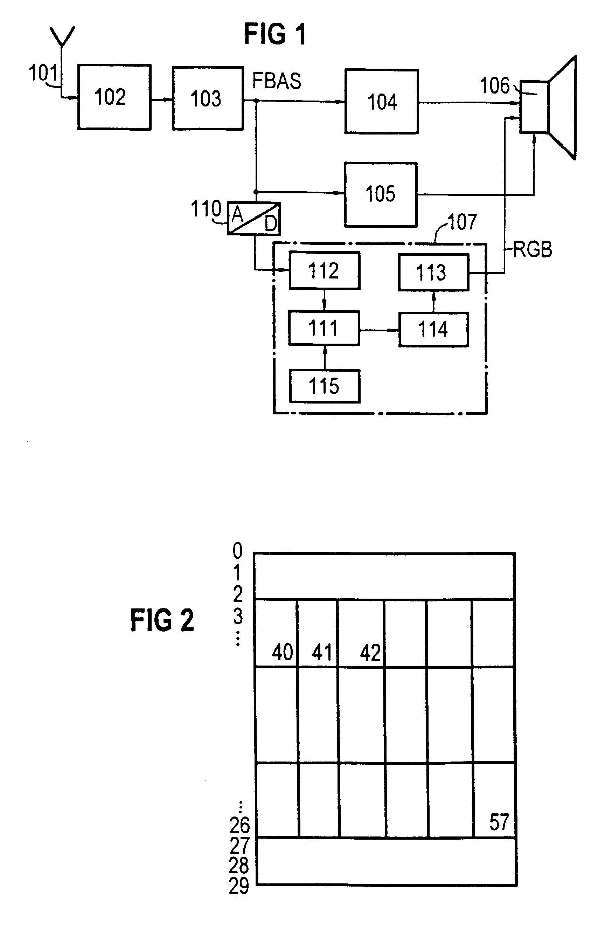

Ein erfindungsgemäßes Gerät kann beispielsweise - wie in Figur 1 dargestellt - als Fernsehempfangsgerät ausgeführt werden. Das Fernsehgerät empfängt über eine Antenne 101 ein Fernsehsignal. In einem Tuner 102 wird das Frequenzband des eingestellten Senders selektiert und in einer Zwischenfrequenz- und Demodulationsstufe 103 das dem eingestellten Sender entsprechende Videosignal auf Zwischenfrequenzlage umgesetzt und demoduliert. Am Ausgang der Einrichtung 103 liegt das Videosignal FBAS im Basisband vor. In einer Bildverarbeitungseinrichtung 104 werden aus dem Videosignal FBAS Farb- und Helligkeitssignale zur Ansteuerung einer Bildröhre 106 erzeugt. In einer Einrichtung 105 werden aus dem Videosignal FBAS Horizontal- und Vertikalimpulse zur Ablenkung des Elektronenstrahls der Bildröhre 106 erzeugt. Eine Einrichtung 107 dient zur Verarbeitung der Teletextsignale. Der Einrichtung 107 wird das Videosignal FBAS über einen Analog-Digital-Wandler 110 digitalisiert zugeführt. Die Einrichtung 107 erzeugt Ausgangssignale RGB zur Ansteuerung der Bildröhre 106.

Die Teletextverarbeitungseinrichtung 107 weist am Eingang für das Videosignal FBAS eine Akquisitionseinrichtung 112 auf. Durch die Akquisitionseinrichtung 112 werden die im Videosignal enthaltenen Teletextdaten abgetrennt und zur Zwischenspeicherung und Weiterverarbeitung in der Einrichtung 107 entsprechend aufbereitet. Eine Steuerungseinrichtung 111 sorgt für die Ablauf- und Datensteuerung im Teletextprozessor 107. Die Steuerungseinrichtung 111 ist zweckmäßigerweise ein softwaregesteuerter Mikroprozessorkern. Für die Programmsteuerung und Datenzwischenspeicherung weist die Einrichtung 107 einen (nicht dargestellten) Arbeitsspeicher auf. Ausgangsseitig enthält der Teletextprozessor 107 eine Einrichtung 113 zur Erzeugung der RGB-Signale in Abhängigkeit von der darzustellenden Teletextinformation.

Der am Bildschirm darstellbare Zeichensatz ist in einem nicht-flüchtigen Speicher 115 gespeichert. Die Steuerungseinrichtung 111 sorgt dafür, daß der Darstellungsgenerator 113 mit der vom Speicher 115 bereitgestellten Bildpunktinformation für die darzustellenden Teletextdaten versorgt wird. Erfindungsgemäß ist vorgesehen, daß die im Speicher 115 enthaltenen Zeichen codiert abgespeichert sind, wobei die zu speichernde Datenmenge komprimiert ist. Hierfür wird eine redundanzvermindernde Codierung verwendet. Beim Auslesen der Zeichen aus dem Speicher 115 wird die gespeicherte Zeicheninformation decodiert und dabei dekomprimiert. Eine am Bildschirm darzustellende Teletextseite wird in einem beschreibbaren flüchtigen Speicher 114 (RAM) zusammengesetzt. Für jedes Zeichen sind die für die Erzeugung des RGB-Signals durch den Darstellungsgenerator 113 notwendige Bildpunktinformation sowie Zeichenattribute, zum Beispiel Vordergrund- und Hintergrundfarbe, Blinken usw., enthalten. Die Bildpunktinformation ist dabei lagerichtig zur am Bildschirm darzustellenden relativen Anordnung der Zeichen untereinander im Speicher 114 gespeichert. Vom Darstellungsgenerator 113 werden die im Darstellungsspeicher 114 gespeicherten Informationen fortlaufend zur Erzeugung der RGB-Signale gelesen. Die lagerichtige Anordnung im Speicher 114 sorgt dafür, daß keine weiteren Umordnungen in der Darstellungsinformation vorzunehmen sind. Die Bildpunktinformation für eine Seite wird folglich nur einmal zusammengesetzt und kann dann mehrfach hintereinander ausgelesen werden. Der Darstellungsspeicher 114 enthält die Information zweier Halbbilder. Der Darstellungsspeicher 114 enthält die Bildpunktinformation für die am Bildschirm darzustellende Teletextseite. Er enthält beispielsweise entsprechend den üblichen Teletextnormen 25 Zeilen, von denen jede 40 Zeichen umfaßt. Dadurch, daß eine Teletextseite vor der Anzeige am Bildschirm im Darstellungsspeicher 114 zuerst zusammengesetzt wird, bleibt für die Zeichendekompression durch die Steuerungseinrichtung 111 genügend Zeit. Der Darstellungsspeicher 114 muß nur bei einer Informationsänderung neu beschrieben werden. Bei Änderungen von Teilen der darzustellenden Seite brauchen nur diese Teile aktualisiert zu werden. Der Dekodierungsaufwand ist minimal. Das Dekompressionsverfahren kann folglich in Software programmiert werden und durch einen üblichen Mikroprozessorkern 111 ausgeführt werden. Aufgrund einer Datenkompression ist die im Speicher 115 zu speichernde Datenmenge für jedes Zeichen unterschiedlich groß. Bei einer Softwarerealisierung kann die Speicheradresse eines Zeichens zum Beispiel in Form von Nachschlagetabellen auf einfache Weise realisiert werden. Bei den heute auf diese Weise verarbeitbaren Datenmengen ist für einen Betrachter keine Verzögerungszeit beim Bildaufbau erkennbar.

Zur Datenkomprimierung können prinzipiell eine Reihe von bekannten Komprimierungsvorschriften (und entsprechend Dekomprimierungsvorschriften) angewandt werden. Übliche Vorschriften, wie zum Beispiel Huffmann-Codierung, Lauflängen-Codierung oder arithmetische Codierung sind jedoch daraufhin optimiert, sowohl die Datenkompression als auch die Datendekompression in möglichst kurzer Zeit auszuführen. Im vorliegenden Fall ist jedoch empfängerseitig keine Datenkompression notwendig. Die nachfolgend beschriebene Datenstruktur im Zeichensatzspeicher 115 ist besonders für eine schnelle Datendekompression für Schriftzeichen geeignet.

Der standardgemäße chinesische Zeichensatz GB5007 enthält 7.632 Zeichen, die jeweils mit einer Auflösung von 24x30 Bildpunkten darstellt werden sollen. Dies ist eine Informationsmenge von etwa 5,5MBit. Die räumliche Aufteilung eines solchen Zeichens ist in Figur 2 dargestellt. Die ersten drei Bildpunktzeilen 0, 1, 2 und die letzten drei Bildpunktzeilen 27, 28, 29 sind Leerzeilen. Diese brauchen folglich nicht gespeichert zu werden und werden in der Steuerungseinrichtung 111 beim bildpunktweisen Zusammensetzen der darzustellenden Teletextseite in den Darstellungsspeicher 114 eingefügt. Die Breite eines Zeichens beträgt 24 Bildpunkte. Der übrige Teil eines Zeichens ist in 18 vorzugsweise gleich große Zeichenabschnitte 40...57 aufgeteilt. Ein Zeichenabschnitt hat dann eine Größe von 4x8 Bildpunkten. Es hat sich gezeigt, daß manche dieser Zeichenabschnitte in verschiedenen Zeichen enthalten sind. Andere dieser Zeichenabschnitte sind dem jeweiligen Zeichen eigentümlich.

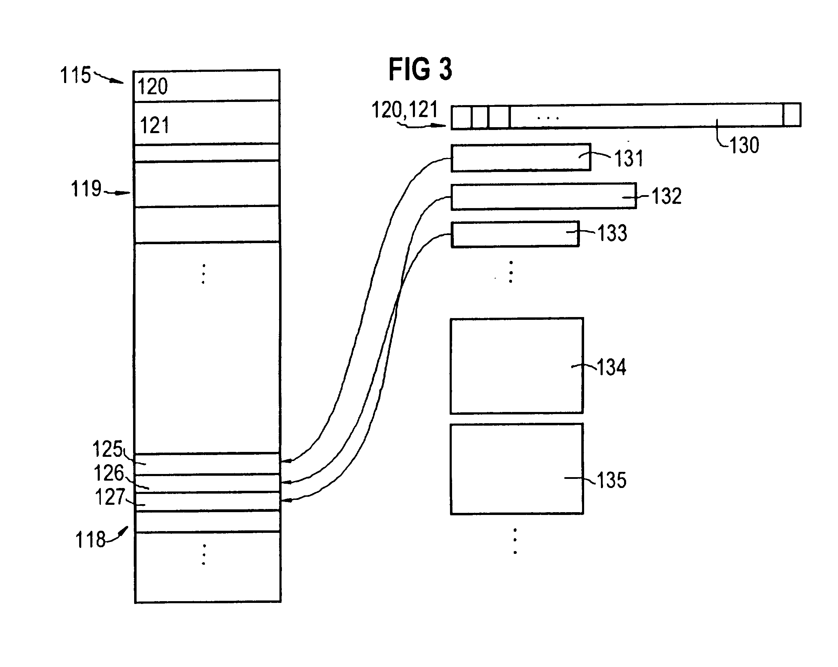

Mit dieser Aufteilung eines Zeichens in Zeichenabschnitte können die Daten im Speicher 114 gemäß Figur 3 folgendermaßen abgelegt werden. Der Speicher enthält einen ersten Speicherbereich 119, in dem die zu je einem Zeichen 120, 121 gehörenden individuellen Daten gespeichert sind. In einem anderen Speicherbereich 118 sind diejenigen Zeichenabschnitte gespeichert, die verschiedenen Zeichen gemeinsam sind, die sogenannten allgemeinen Zeichenabschnitte 125, 126, 127. Bei der Speicherung der individuellen Zeicheninformation 120, 121 sind entsprechende Zeiger vorgesehen, die auf die Speicheradresse der jeweils im Zeichen enthaltenen allgemeinen Zeichenabschnitte 125...127 verweisen. Beim Auslesen aus dem Speicher werden die zu einem Zeichen gehörenden Daten zur Bildpunktinformation zusammengesetzt.

Eine beispielhafte Organisation der einem Zeichen 120, 121 zugeordneten Daten ist im rechten Teil der Figur 3 dargestellt. Ein solcher ein Zeichen beschreibender Datensatz enthält eine Kopfzeile 130, in der für jeden Zeichenabschnitt 40...57 ein Bit vorgesehen ist. Durch dieses Bit wird festgelegt, ob der ihm zugeordnete Zeichenabschnitt ein allgemeiner Zeichenabschnitt ist, der im Speicherblock 118 gespeichert ist, oder ob der jeweilige Zeichenabschnitt im Zeichendatensatz 120, 121 direkt gespeichert ist. Die Kopfzeile 130 umfaßt folglich 18 Bit. Der Zeichendatensatz enthält darüber hinaus für die entsprechend der Kopfzeile 130 angezeigten allgemeinen Zeichenabschnitte jeweils einen Zeiger, der auf die Speicheradresse des allgemeinen Zeichens im Speicherbereich 118 verweist. Im vorliegenden Fall sind drei Zeiger 131, 132, 133 vorhanden, die auf die jeweiligen Speicheradressen der allgemeinen Zeichenabschnitte 125, 126, 127 verweisen. Die Reihenfolge der Zeiger entspricht der jeweiligen Reihenfolge des Auftretens der entsprechenden allgemeinen Zeichenabschnitte im Zeichen. Im Anschluß an den letzten der Zeiger sind dann die Bildpunktdaten für diejenigen Zeichenabschnitte 134, 135 gespeichert, die nicht als allgemeine Zeichenabschnitte vorliegen, sondern individuell für jedes einzelne Zeichen abgespeichert werden müssen.

Durch die Steuerungseinrichtung 111 wird zum Auslesen der Zeichen aus dem Speicher 115 zuerst die Kopfzeile ausgewertet. Diese gibt an, ob die für die Zeichenabschnitte 40...57 gespeicherten Bildpunktdaten in diesem Datensatz nachfolgend enthalten sind oder ob ein allgemeiner Zeichenabschnitt vorliegt, der im gesonderten Bereich 118 des Speichers abgespeichert ist, auf den über Zeiger verwiesen wird. Beim weiteren Auslesevorgang für das Zeichen werden die allgemeinen Zeichenabschnitte gemäß den Zeigern ausgelesen. Anschließend werden die für das Zeichen individuellen Zeichenabschnitte ausgelesen. Im Darstellungsspeicher 114 wird das Zeichen dann zusammengesetzt.

Um die Zeigerlänge möglichst gering zu halten und damit den Speicherplatzbedarf weiter zu reduzieren, ist es zweckmäßig, die allgemeinen Zeichenabschnitte mit einer fortlaufenden Nummer zu versehen. Die Zeiger 131, 132, 133 enthalten dann die jeweilige Nummer des allgemeinen Zeichenabschnitts. Durch die Steuerungseinrichtung 111 wird diese Nummer in die entsprechende Speicheradresse umgesetzt. Dies kann zum Beispiel dadurch erfolgen, daß die allgemeinen Zeichenabschnitte jeweils eine fest vorgegebene Speicherplatzgröße einnehmen, so daß zur Berechnung der jeweiligen Speicheradresse eine Multiplikation von allgemeiner Zeichenabschnittsnummer und Speicherplatzgröße sowie eine Addition einer Anfangsadresse ausreicht. Andererseits könnte die Umsetzung über eine Nachschlagettabelle durchgeführt werden.

Die mittels der oben beschriebenen redundanzvermindernden Codierung abgespeicherten Zeichen 120, 121 haben einen unterschiedlichen Speicherplatzbedarf. Die Adressierung der einzelnen Zeichen kann in der Steuerungseinrichtung 111 durch eine entsprechende Programmierung, zum Beispiel in Form einer Nachschlagetabelle berücksichtigt werden. Andererseits könnte der Speicherzugriff durch eine entsprechende hardwaregestützte Realisierung bei der Speicheradressierung erreicht werden. In der Nachschlagetabelle kann die Adresse jedes Zeichens gespeichert sein oder nur eine gewisse Auswahl von Zeichen, zum Beispiel jedes achte Zeichen. Im letzteren Fall muß dann über die Tabelle auf das dem auszulesenden Zeichen vorhergehende Zeichen zugegriffen werden, um dann unter Auswertung zumindest der Kopfzeile jedes nachfolgend gespeicherten Zeichens zum auszulesenden Zeichen zu gelangen.

## Patentansprüche

1. Gerät zur Verarbeitung von Videosignalen, enthaltend eine Teletextverarbeitungseinrichtung (107), die aufweist:
- eine Abtrenneinrichtung (112) zur Abtrennung von Teletextdaten aus einem empfangenen Videosignal (FBAS),
- eine Signalerzeugungseinrichtung (113) zur Erzeugung von an einem Bildschirm (106) darstellbaren Signalen zur Anzeige von in den Teletextdaten enthaltenen Zeichen,
- einen nichtflüchtigen Speicher (115), in dem an einem Bildschirm darstellbare Zeichen gespeichert sind,
- eine Steuerungseinrichtung (111), die die im nichtflüchtigen Speicher (115) enthaltenen Zeichen zur Anzeige am Bildschirm der Signalerzeugungseinrichtung (113) zuführt,
**dadurch gekennzeichnet**, daß
- die im nichtflüchtigen Speicher (115) enthaltenen Zeichen mit redundanzvermindernder Kodierung gespeichert sind,
- die Steuerungseinrichtung (111) derart ausgeführt ist, daß die im nichtflüchtigen Speicher (115) enthaltenen Zeichen beim Auslesen dekodiert werden, und daß
- ein beschreibbarer Speicher (114) vorgesehen ist, in dem die Zeichen zur Anzeige am Bildschirm dekodiert und bildweise zwischengespeichert werden.

2. Gerät nach Anspruch 1,
**dadurch gekennzeichnet**, daß
der beschreibbare Speicher (114) zwischen die Steuerungseinrichtung (111) und die Signalerzeugungseinrichtung (113) geschaltet ist.

3. Gerät nach Anspruch 2,
**dadurch gekennzeichnet**, daß
im beschreibbaren Speicher (114) die zwischengespeicherten Zeichen zur Anzeige am Bildschirm bildpunktweise und teletextseitenweise gespeichert sind.

4. Gerät nach einem der Ansprüche 1 bis 3,
**dadurch gekennzeichnet**, daß
der nichtflüchtige Speicher (115) eine Vielzahl von am Bildschirm darstellbaren Zeichen enthält, daß für jedes Zeichen eine Anzahl von Zeichenabschnitten (40 ... 57) gespeichert ist, daß ein Zeichenabschnitt, der in mindestens zwei Zeichen enthalten ist (allgemeiner Zeichenabschnitt), nur einmal im nichtflüchtigen Speicher (115) gespeichert ist, daß für den in einem darstellbaren Zeichen enthaltenen allgemeinen Zeichenabschnitt ein auf den Speicherplatz (125, 126, 127) des allgemeinen Zeichenabschnitts verweisender Zeiger (131, 132, 133) gespeichert ist und daß die Steuerungseinrichtung (111) derart ausgebildet ist, daß zur Dekodierung ein aus dem nichtflüchtigen Speicher (115) auszulesendes Zeichen aus den Zeichenabschnitten und allgemeinen Zeichenabschnitten zusammengesetzt wird.

5. Gerät nach Anspruch 4,
**dadurch gekennzeichnet**, daß die Zeichen aus in Zeilen aufgeteilten Bildpunkten bestehen und daß die Steuerungseinrichtung (111) derart ausgebildet ist, daß den Zeichen nach dem Auslesen aus dem nichtflüchtigen Speicher (115) mindestens eine Leerzeile in vertikaler Richtung hinzugefügt wird.

6. Gerät nach einem der Ansprüche 4 oder 5,
**dadurch gekennzeichnet**, daß
der nichtflüchtige Speicher für mindestens ein darstellbares Zeichen einen Speicherbereich (120, 121) aufweist, der enthält:
- für jedes der Zeichenabschnitte eine Kennung (130), ob der Zeichenabschnitt im Speicherbereich (120, 121) des darstellbaren Zeichens enthalten ist oder ob der Zeichenabschnitt ein allgemeiner Zeichenabschnitt ist,
- falls eine der Kennungen (130) angibt, daß ein allgemeiner Zeichenabschnitt enthalten ist, einen Zeiger (131, 132, 133) auf die Speicheradresse (125, 126, 127) des allgemeinen Zeichenabschnitts,
- die Bildpunktinformation (134, 135) für diejenigen Zeichenabschnitte, für die die jeweilige Kennung (130) angibt, daß sie nicht allgemeine Zeichenabschnitte sind.

7. Gerät nach einem der Ansprüche 4 bis 6,
**dadurch gekennzeichnet**, daß
die allgemeinen Zeichenabschnitte zusammenhängend gespeichert sind, daß jedem allgemeinen Zeichenabschnitt eine fortlaufende Nummer zugeordnet ist, daß einer der Zeiger (131, 132, 133) für einen der allgemeinen Zeichenabschnitte die jeweilige ihm zugeordnete Nummer umfaßt und daß durch die Steuerungseinrichtung (111) die Speicheradresse des allgemeinen Zeichenabschnitts unter Auswertung der Nummer ermittelt wird.

8. Gerät nach einem der Ansprüche 1 bis 7,
**dadurch gekennzeichnet**, daß
ein Tuner (102) vorgesehen ist, dem ein von einer Antenne (101) empfangenes Signal zugeführt wird, eine Zwischenfrequenzstufe (103) und eine ihr ausgangsseitig nachgeschaltete Demodulatorstufe (103), die das Videosignal erzeugt, und ein Bildschirm (106), der von der Signalerzeugungseinrichtung (113) ansteuerbar ist.

9. Verfahren zum Betreiben eines Geräts nach einem der Ansprüche 1 bis 8,
**dadurch gekennzeichnet**, daß
aus einem empfangenen Videosignal (FBAS) abgetrennte Teletextdaten unter Verwendung von in einem nichtflüchtigen Speicher (115) gespeicherten darstellbaren Zeichen, die in der Redundanz verringert kodiert sind und denen die Daten zuordenbar sind, an einem Bildschirm (106) des Geräts dargestellt werden, daß die Zeichen beim Auslesen aus dem Speicher (115) dekodiert werden und daß die Zeichen dekodiert in einen eine Teletextseite aufnehmenden Speicher (114) geschrieben werden.

10. Verfahren nach Anspruch 9,
**dadurch gekennzeichnet**, daß
für mindestens eines der Zeichen ein Speicherabschnitt vorgesehen ist, in dem mindestens ein für dieses Zeichen eigentümlicher Zeichenabschnitt (134, 135) und mindestens ein Zeiger (131, 132, 133) gespeichert sind, der auf einen weiteren Speicherabschnitt (125, 126, 127) hinweist, in dem ein diesem und weiteren Zeichen zuordenbarer Zeichenabschnitt gespeichert ist, daß der dem Zeichen eigentümliche Zeichenabschnitt und durch Zugriffssteuerung über den Zeiger der weiteren Zeichen zuordenbare Zeichenabschnitt aus dem nichtflüchtigen Speicher (115) ausgelesen wird und daß die das Zeichen repräsentierende in Bildpunkten aufgelöste Information in den die Teletextseite aufnehmenden Speicher (114) geschrieben wird.

## Claims

1. Apparatus for processing video signals, containing a teletext processor (107) which has:
- a separating device (112) for separating off teletext data from a received video signal (FBAS),
- a signal generating device (113) for generating signals which can be represented on a screen (106), in order to display characters contained in the teletext data,
- a nonvolatile memory (115) in which characters which can be represented on a screen are stored,
- a control device (111) which feeds the characters contained in the nonvolatile memory (115) for display on the screen of the signal generating device (113),
characterized in that
- the characters contained in the nonvolatile memory (115) are stored with redundancy-reducing coding,
- the control device (111) is designed in such a way that the characters contained in the nonvolatile memory (115) are decoded on being read out, and in that
- a memory (114) which can be written to is provided, in which memory (114) the characters for display on the screen are decoded and are buffered on a frame basis.

2. Apparatus according to Claim 1, characterized in that the memory (114) which can be written to is connected between the control device (111) and the signal generating device (113).

3. Apparatus according to Claim 2, characterized in that the buffered characters for display on the screen are stored on a pixel basis and in the form of teletext pages in the memory (114) which can be written to.

4. Apparatus according to one of Claims 1 to 3, characterized in that the nonvolatile memory (115) contains a plurality of characters which can be represented on the screen, in that a number of character sections (40...57) is stored for each character, in that a character section which is contained in at least two characters (general character section) is stored only once in the nonvolatile memory (115), in that a pointer (131, 132, 133) which refers to the memory location (125, 126, 127) of the general character section is stored for the general character section contained in a character which can be represented, and in that the control device (111) is constructed in such a way that, for decoding, a character which is to be read out of the nonvolatile memory (115) is composed of the character sections and general character sections.

5. Apparatus according to Claim 4, characterized in that the characters consist of pixels divided into lines, and in that the control device (111) is constructed in such a way that at least one blank line in the vertical direction is added to the characters after the reading out from the nonvolatile memory (115).

6. Apparatus according to one of Claims 4 or 5, characterized in that the nonvolatile memory has, for at least one character which can be represented, a memory area (120, 121) which contains:
- an identifier (130) for each of the character sections indicating whether the character section is contained in the memory area (120, 121) of the character which can be represented or whether the character section is a general character section,
- if one of the identifiers (130) indicates that a general character section is contained, a pointer (131, 132, 133) to the memory address (125, 126, 127) of the general character section,
- the pixel information (134, 135) for those character sections for which the respective identifier (130) indicates that they are not general character sections.

7. Apparatus according to one of Claims 4 to 6, characterized in that the general character sections are stored in a coherent fashion, in that a consecutive number is assigned to each general character section, in that one of the pointers (131, 132, 133) for one of the general character sections comprises the respective number assigned to it, and in that the memory address of the general character section is determined by the control device (111) by evaluating the number.

8. Apparatus according to one of Claims 1 to 7, characterized in that a tuner (102) to which a signal which is received by an antenna (101) is fed, an intermediate frequency stage (103) and a demodulator stage (103) which is connected downstream of the latter at the output end and which generates the video signal, and a screen (106) which can be driven by the signal generating device (113) are provided.

9. Method for operating an apparatus according to one of Claims 1 to 8, characterized in that teletext data which are separated off from a received video signal (FBAS) are represented on a screen (106) of the apparatus using characters which can be represented, which are stored in a nonvolatile memory (115), which are coded with reduced redundancy and to which the data can be assigned, in that the characters are decoded during the reading out from the memory (115), and in that the characters are written, in decoded form, into a memory (114) which holds one teletext page.

10. Method according to Claim 9, characterized in that provided for at least one of the characters is a memory section in which at least one character section (134, 135) which is peculiar to this character and at least one pointer (131, 132, 133) are stored, which pointer (131, 132, 133) refers to a further memory section (125, 126, 127) in which a character section which can be assigned to this character and to further characters is stored, in that the character section which is peculiar to the character and the character section which can be assigned by access control by means of the pointer of the further characters are read out of the nonvolatile memory (115), and in that the information which represents the character and is resolved into pixels is written into the memory (114) which holds the teletext page.

## Revendications

1. Appareil pour le traitement de signaux vidéo comportant un dispositif de traitement de télétexte (107) qui comporte :
- un dispositif d'extraction (112) pour extraire des données de télétexte d'un signal vidéo reçu (FBAS),
- un dispositif de production de signaux (113) pour produire des signaux pouvant être représentés sur un écran (106) et destinés à l'affichage de caractères contenus dans les données de télétexte,
- une mémoire non volatile (115) dans laquelle sont mémorisés des caractères pouvant être représentés sur un écran,
- un dispositif de commande (111) qui envoie au dispositif de production de signaux (113) les caractères contenus dans la mémoire non volatile (115) pour les afficher sur l'écran,
caractérisé par le fait que
- les caractères contenus dans la mémoire non volatile (115) sont mémorisés avec un codage réduisant la redondance,
- le dispositif de commande (111) est conçu de manière à décoder lors de la lecture les caractères contenus dans la mémoire non volatile (115), et que
- il est prévu une mémoire vive (114) dans laquelle les caractères destinés à l'affichage sur l'écran sont décodés et sont mémorisés temporairement image par image.

2. Appareil selon la revendication 1,
caractérisé par le fait que la mémoire vive (114) est placée entre le dispositif de commande (111) et le dispositif de production de signaux (113).

3. Appareil selon la revendication 2,
caractérisé par le fait que les caractères mémorisés temporairement et destinés à l'affichage sur l'écran sont mémorisés dans la mémoire vive (114), élément d'image par élément d'image, et page de télétexte par page de télétexte.

4. Appareil selon l'une des revendications 1 à 3,
caractérisé par le fait que la mémoire non volatile (115) contient un certain nombre de caractères représentables sur l'écran, un certain nombre de fragments de caractère (40 à 57) sont mémorisés pour chaque caractère, un fragment de caractère qui est contenu dans au moins deux caractères (fragment de caractère général) n'est mémorisé qu'une seule fois dans la mémoire non volatile (115), pour le fragment de caractère général contenu dans un caractère représentable, un pointeur (131, 132, 133) pointant sur l'emplacement de mémoire (125, 126, 127) du fragment de caractère général est mémorisé, et le dispositif de commande (111) est conçu de telle sorte que, pour le décodage, un caractère à lire dans la mémoire non volatile (115) est composé des fragments de caractère et de fragments de caractère généraux.

5. Appareil selon la revendication 4,
caractérisé par le fait que les caractères sont constitués d'éléments d'image divisés en lignes et que le dispositif de commande (111) est conçu de telle sorte qu'au moins une ligne vide est ajoutée en direction verticale aux caractères après la lecture dans la mémoire non volatile (115).

6. Appareil selon l'une des revendications 4 ou 6,
caractérisé par le fait que la mémoire non volatile comporte pour au moins un caractère représentable une zone de mémoire (120, 121) qui contient :
- pour chacun des fragments de caractère, un indicateur (130) qui spécifie si le fragment de caractère est contenu dans la zone de mémoire (120, 121) du caractère représentable ou si le fragment de caractère est un fragment de caractère général,
- si un des indicateurs (130) indique qu'un fragment de caractère général est contenu dans le caractère, un pointeur (131, 132, 133) sur l'adresse en mémoire (125, 126, 127) du fragment de caractère général, et
- l'information d'éléments d'image (134, 135) pour ceux des fragments de caractère pour lesquels l'indicateur respectif (130) indique qu'ils ne sont pas des fragments de caractère généraux.

7. Appareil selon l'une des revendications 4 à 6,
caractérisé par le fait que les fragments de caractère généraux sont mémorisés dans une zone contigüe, des numéros consécutifs sont associés aux fragments de caractère généraux, un des pointeurs (131, 132, 133) pour un des fragments de caractère généraux comprend le numéro qui lui est associé, et l'adresse en mémoire du fragment de caractère général est déterminée par le dispositif de commande (111) en exploitant le numéro.

8. Appareil selon l'une des revendications 1 à 7,
caractérisé par le fait qu'il est prévu un tuner (102), auquel est envoyé un signal reçu par une antenne (101), un étage de fréquence intermédiaire (103) et un étage de démodulation (103), qui est branché côté sortie, du côté aval de l'étage précédent et qui produit le signal vidéo, et un écran (106) qui peut être commandé par le dispositif de production de signaux (113).

9. Procédé pour l'exploitation d'un appareil selon l'une des revendications 1 à 8,
caractérisé par le fait qu'on représente sur un écran (106) de l'appareil des données de télétexte extraites d'un signal vidéo reçu (FBAS) en utilisant des caractères représentables qui sont mémorisés dans une mémoire non volatile (115), qui sont codés de manière à réduire la redondance et auxquels les données peuvent être associées, qu'on décode les caractères lors de la lecture de la mémoire (115), et qu'on enregistre les caractères décodés dans une mémoire (114) recevant une page de télétexte.

10. Procédé selon la revendication 9,
caractérisé par le fait qu'on prévoit, pour au moins l'un des caractères, une zone de mémoire dans laquelle on mémorise au moins un fragment de caractère (134, 135) propre à ce caractère et au moins un pointeur (131, 132, 133) qui pointe sur une autre zone de mémoire (125, 126, 127) dans laquelle on mémorise un fragment de caractère pouvant être associé à ce caractère et à d'autres caractères, qu'on lit dans la mémoire non volatile (115) le fragment de caractère propre au caractère et, par une commande d'accès par l'intermédiaire du pointeur, le fragment de caractère pouvant être associé à d'autres caractères, et qu'on enregistre dans la mémoire (114) recevant la page de télétexte l'information représentant le caractère et décomposée en éléments d'image.
